# EUROPEAN PATENT SPECIFICATION

(11) **EP 4 021 814 B1**
(45) Date of publication and mention of the grant of the patent: **21.02.2024**
(21) Application number: 20786626.0
(22) Date of filing: 14.08.2020
(51) Int. Cl.: B65D 5/20, B65D 5/46, B65D 5/48, B65D 85/36

(54) **A SELF-FOLDING BOX WITH COMPARTMENTS AND CARRY HANDLE FOR PACKAGING PIZZAS**
FALTSCHACHTEL MIT FÄCHERN UND TRAGEGRIFF ZUM VERPACKEN VON PIZZAS
BOÎTE AUTOPLIANTE À COMPARTIMENTS ET POIGNÉE DE TRANSPORT POUR L'EMBALLAGE DE PIZZAS

(30) Priority: 27.08.2019 RS P20191111
(43) Date of publication of application: 06.07.2022
(73) Proprietor: Nikolic, Ivan, 11000 Beograd (RS)
(72) Inventor: Nikolic, Ivan, 11000 Beograd (RS)
(74) Representative: Plavsa & Plavsa D.O.O
(86) International application number: PCT/RS2020/000011
(87) International publication number: WO 2021/040553

(56) References cited:
- DE-U1- 20 016 110
- KR-B1- 100 856 067
- US-A- 4 886 179
- US-A1- 2014 252 076

## Description

### Field of technology

The invention, in a broader sense, belongs to the field of packaging for the transport of materials, e.g. cardboard boxes and more closely, can be defined as the packaging made by folding all the parts that are connected to the central part to shape the body and the parts of the packaging that represent its internal or external equipment, e.g. carry handles.

### Technical problem

The technical problem solved by the present invention consists in how to structurally solve the transport packaging for packaging pizza slices obtained by cutting a circular pizza into six slices and without the slices sticking to the packaging or another pizza slice; packaging that retains its shape when packing hot slices of pizza; packaging that is quickly, easily formed and filled, and is transported and stored in the flat form which is far more efficiently and affects the low cost of handling costs; packaging which, after forming and filling, takes up a smaller area and which can be carried by the carry handle or placed in the most commonly used bag dimensions; packaging that can be easily taken from the point of sale, which contributes to the expansion of the target group of customers; packaging in which the pizza slices stay warm longer and the influence of moisture is reduced; packaging that is quickly machine-made and where the use of surfaces for placing slices of pizza is maximum; packaging which can be printed on the outer and inner side and that on the inside of the packaging meets all requirements, which relate to the health safety and microbiology; packaging that is transported in a flat form and is formed by simply folding upwards the lateral panels at the place of packaging; packaging which, if necessary, can be disinfected by processes permitted for use with food; packaging that competes with the existing cardboard or PET packaging at the price of the product, and at the same time on the inside it fully satisfies all demands, but on the aesthetic side, it does not reveal the structure of the cartons used for the formation of packaging, while fulfilling the protective, storage, transport, use and environmental function and complied with valid standards and regulations in this area.

### State of the art

Various construction solutions for pizza transport packaging have been used so far.

It is generally accepted that packaging material is the most important element in creating the packaging design and it practically determinates the choice of technology for its production. Precisely these facts have influenced the strong development of cardboard packaging in addition to polymeric materials which in combination with it enables safer packaging in light cardboard boxes made of special cardboards coated with a polymer layer resistant to temperature, humidity, etc.

In the current practice of facilities that produce pizzas with high productivity, the packaging process is divided into the packaging of pizza slices and packaging of whole pizzas. A slice of pizza is obtained by cutting the pizza by dividing the 360° angle with the center in the middle of the circular pizza into a quarter, sixth or eighth. That is, a slice of pizza covers the area formed by the angle between the radius of the circle obtained by division the angle of 360° with the center in the center of the pizza and the circular arc above that angle that forms the end of the pizza. So that slice of pizza has the approximate shape of an isosceles triangle whit sides that are the radius of the circle and the third line is not a straight one but a circular arc over that angle. The most common angles formed by division are 90°, 60°, and 45°. The diameters of the circles forming the edge of the pizza, which are commonly used are 28cm, 32cm, 37cm, 40cm, 42cm, 50cm, and 55cm.

The problem with packing pizza slices is that the low price of a slice of pizza is drastically increased by the price of packaging, which satisfies health and microbiological correctness and safety. In terms of economy, a box for one slice of pizza is rarely used and the boxes that are known on the market, have developed in the direction of increasing the base of the box to place more slices of pizza, the whole pizza. Such solutions are not practical because the large area of the base of the box is not practical for carrying and quickly reveals the temperature, so most pizza producers rely on delivery, which further increases handling costs and delivery itself is difficult in locations that are not accessible by cars, bicycles, scooters, and the boxes are not convenient for public transportation. On the other hand, cartons up to 450 g / m2 that can be printed with offset machines often do not have the strength to keep their shape during packaging, and corrugated cardboards require different printing technologies with far poorer print quality, they are much bulkier and therefore the handling costs are many times higher.

The solution of the same applicant from the patent RS 58588 B1, published on 31.05.2019, is known, with the name " A SELF FOLDING BOX WITH A CARRIER FOR PACKAGING PIZZAS" which shows a box for packing pizza slices comprises of a carrier that is formed by pads, superposed one on another and the box in which the carrier is inserted. This solution enables the packaging of slices of pizza one above the other, and the carrier retains its strength when packaging the slices, and with its strength, it also provides strength to the box in which it is inserted. The dimensions of the pizza slices differ in terms of dividing the round pizza into quarters, sixths or eighths. The disadvantage of the invention is that the carriers must be manually formed during the packaging of the pizza slices, which requires a much longer time compared to the formation of the present invention, the present invention is of simpler construction and has a carrying handle.

The document KR 100 856 067 B1 teaches a self-folding box for pizza having two compartment having a rectangual shape. According to this patent in order to effectively pack a pizza in two compartments, either half of the pizza must be packed in each compartment, which affects the dimensions of the base surface (especially for large pizzas 55-60cm) or a pizza must be cut into some other shapes of pizza slices because the rectangular surface of the base is less efficient for pizza slices cut into 6 parts, which further complicates the use of such a solution for packaging whole pizzas.

The documents US 2014/252076 A1, DE 200 16 110 U1 and US 4 886 179 A teaches boxes having compartments for separating slices or parts of a pizza but none of them disclose the rhomboid shape for the bases and compartments.

### Summary of the Invention

The box for packing pizza slices is formed by simply folding upwards lateral panels and takes form of a box with compartments, where two slices of pizza are placed on each compartment and lower base of the box. The box is in the shape of a prism whose bases are rhomboid in shape and two compartments are placed inside, it is closed using flaps and locks with the option of inserting a handle for carrying a box. This allows the producers to form a box in a few seconds, the box base is three times smaller than a surface of pizza, and placing slices on top of each other allows pizza to stay warm, and it is easier to carry.

The advantage of the box according to the invention is that this flat form of the box, which is transported and stored to pizza manufacturer, is many times smaller in volume than the known boxes made of corrugated cardboard, and thus handling costs are much lower.

A further advantage of the box according to the invention is also that compartments for pizza slices are formed by folding upwards panels in a position ready for filling a box, which reduces time of formation of a box. Pizza slice compartments are retracted towards the inside of a box regarding outer edges of filling opening, which enables arched sides of pizza slices to rest on top of each other. In this way, elastic characteristics of the dough are used in terms of stressing on inner sides of a box, which further strengthens locking of the box.

The box according to the invention enables reduction of volume of unformed box 5 to 6 times by using voluminous cartons 0.4-0.7 mm thick which makes transport and storage much cheaper. The box can be produced from corrugated cardboard as well as from cardboard thicknesses greater than 0.8 mm and also from cardboard with a protective layer, and it can be disinfected for microbiological protection.

A further advantage of the box according to the invention is that by inserting the box into oven, pizza can be heated to temperature predicted by the manufacturer of cardboard or polymer layer. The box can be stored in refrigerator, and used box takes up much less space for storage in garbage containers.

A further advantage of the box according to the invention is that it is possible to pack slices of pizza one above the other, and a box retains its strength when packing hot slices.

A further advantage of the box according to the invention is that such a folded blank allows a box with stated characteristics to be machine-produced, printed, cut along cutting lines, pressed along folding lines, and glued to a form in sheets ready for folding upwards and forming box. In the first phase, sheet with or without polymer layer is printed, printed sheet is cut in machine with tool along outer contour, cutting lines and folding lines are also made, then shaped folded blank is inserted into gluing machine. Shaped folded blank allows that all folding lines, around which glued parts rotate, to be parallel to direction of movement of a box in machine, which enables gluing process, in well-known machines in printing industry. Firstly, glue is applied in a line on marked place of the upper part of shaped folded blank, parallel to the direction of movement through machine, and marked part is glued, in one pass. After that, obtained form is rotated so that the bottom flat part of glued form is turned upwards, and it returns to gluing. Then glue is applied in a line to two marked places on glued form, which are parallel to the direction of movement through machine. In one pass, first, glue is applied and a first marked part is being glued and a second marked part is being glued over the first one. The essence of invention is that the flat shape of a box formed in this way is transported and stored, and can easily be formed by hand folding upwards lateral panels, it gets the shape of a box with compartments with the option of inserting a handle. A box retains its strength in transport, slices of pizza retain heat, and final consumer is enabled to use it elegantly.

### Brief description of drawings

In order to facilitate the understanding of the invention, as well as to show how it can be realized in practice, embodiments of boxes are shown in the attached figures as follows:

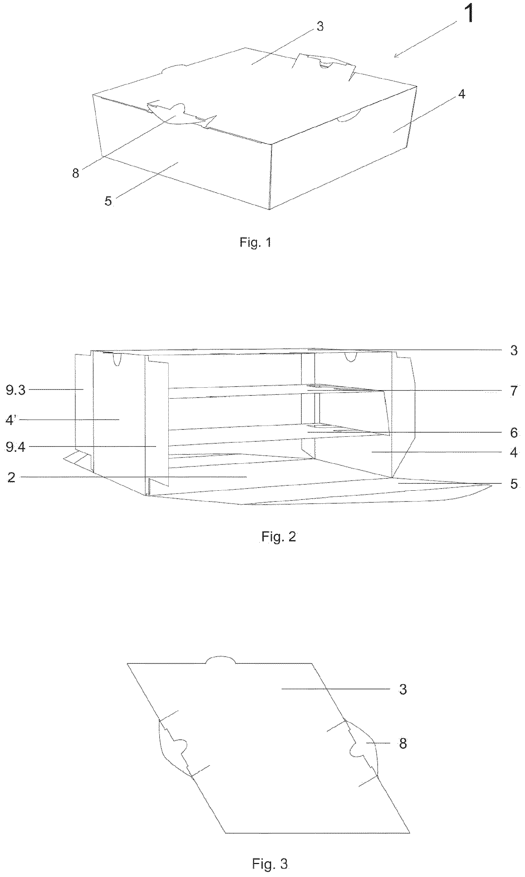

Figure 1- shows the axonometric appearance of a closed box,
Figure 2 - shows the axonometric appearance of an open box,
Figure 3 - shows a box, plane view,
Figure 4 - shows a first embodiment of a shaped folded blank of the " A " box, plane view,
Figure 5 - shows shaped folded form of the " C " box, plane view,
Figure 6 - shows shaped folded form of the " C " box, turned by 180°, plane view,
Figure 7 - shows shaped folded form of the " D ", plane view,
Figure 8 - shows appearance of flat form of a box 1, shown in dot folding lines, plane view,
Figure 9 - shows appearance of flat form of a box 1, shown in solid lines, plane view,
Figure 10 - shows axonometric appearance of a box, with lateral panels folded upwards,
Figure 11 - shows a second embodiment of a shaped folded blank of a box " A1 ", plane view,
Figure 12 - shows shaped folded form of a box " C1 ", plane view,
Figure 13 - shows shaped folded form of a box " D1 ", plane view,
Figure 14 - shows appearance of flat form of a box 1, shown in dots folding lines, plane view,
Figure 15 - shows an open box, front view,
Figure 16 - shows shaped folded blank " V " of a carry handle,
Figure 17 - shows axonometric appearance of the box with a carry handle,
Figure 18 - shows appearance of a box with a carry handle, side view,
Figure 19 - shows appearance of a box with a carry handle, plane view.

### Description of the invention

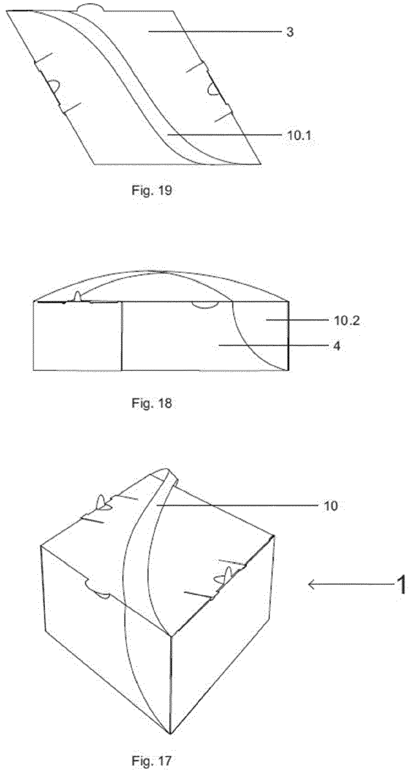

The present invention relates to a box 1 (Fig. 17) and a carry handle 10 (Fig. 17). Box 1 is made in a form of a prism with bases 2, 3 made in shape of a rhomboid, and lateral panels 4, 4', while the rectangular parts of a flap 5 are made on the other two sides for closing box 1. Inside box 1, there are two compartments 6, 7 which enable packing of two slices of pizza on each compartment one above the other, while box 1 retains its shape and hardness when packing hot slices of pizza. After filling, box is closed by flaps 5, 9.1, 9.2, 9.3, 9.4 and carry handle 10 for carrying box 1 is inserted

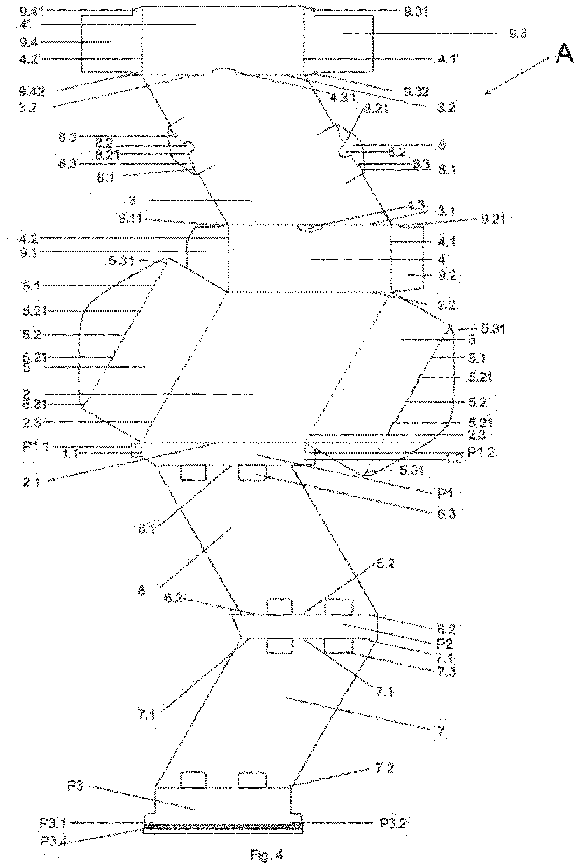

Box 1 is formed from a pre-prepared and shaped folded blank A (Fig. 4) which is made of cardboard, corrugated cardboard, or cardboard with a protective polymer layer. Cardboard can be printed on outside and inside, and coated with a thin polymer layer for greater health safety. Prepared cardboard is placed in machine for cutting and stamping folding lines, using a tool with knives (not shown). In the tool there are knives for cutting along outer contours of a folded blank A, shown by solid lines on a folded blank A, knives for cutting along lines 4.31, 5.2, 5.21, 5.31, 8.1, 8.21, rectangular holes 6.3, 7.3 and semicircular hole 4.3, are shown by solid lines on folded blank A. With rounded knives, which partially enter the cardboard, folding lines 1.1, 1.2, 2.1, 2.2, 2.3, 3.1, 3.2, 4.1, 4.2, 4.1', 4.2', 5.1, 6.1, 6.2, 7.1, 7.2, 8.3 are stamped on folded blank A, and they are shown by dotted lines.

The central part of shaped folded blank A (Fig. 4) represents a surface of base 2 of a rhomboid shape with sides which are represented by folding lines 2.1, 2.2, 2.3, 2.3, that folding line 2.1 continues into an irregularly pentagonal flap P1 with a longer side which is folding line 2.1 and parallel shorter side is folding line 6.1, which allows compartments to be retracted inwards, in relation to outer edges of a opening. Vertically, at one end of folding line 2.1 is folding line 1.2 which continues into a surface flap P1.2 while at the other end of a folding line 2.1 is the vertical and shorter folding line 1.1 which continues into a surface of flap P1.1. Folding line 6.1 continues into the rhomboid compartment surface 6 while the other side is folding line 6.2, parallel to a folding line 6.1, and it continues into the trapezoidal-shaped surface P2 with a longer base which is an extended folding line 6.2 and the shorter base is folding line 7.1, parallel and of the same length with folding line 6.2, and it continues into a surface of a compartment 7 of rhomboid shape. Parallel to a folding line 7.1 is folding line 7.2 which continues into a rectangular surface P3 with extended surfaces of flaps P3.1, P3.2 at the end. On a surface of a compartment 6 along folding lines 6.1, 6.2 are made two rectangular openings 6.3 for ventilation and on a surface of a compartment 7 along folding lines 7.1, 7.2 are made two rectangular openings 7.3 for ventilation.

The other side of base 2 is folding line 2.2, parallel to a folding line 2.1, which continues into a surface of lateral panel 4 of rectangular shape with shorter sides which are folding line 4.1 which continues into a flap 9.2 and a folding line 4.2 which continues into a flap 9.1. The other side of rectangle, folding line 3.1 is parallel to folding line 2.2, at one end it extends to the side of a flap 9.2 on which shortened part of 9.21 is made and at the other side, it extends to the side of a flap 9.1 on which shortened part 9.11 is made. On a surface of lateral panel 4, a semicircular opening 4.3 for ventilation is made in a middle of folding line 3.1. The folding line 3.1 continues into a surface of base 3 of rhomboid in shape, which other parallel side is a folding line 3.2. In the middle of the other two parallel sides of base 3 along a folding line 8.3 continues into a flap 8, where at the ends of folding line 8.3 there are elevated cutting lines 8.1, and in the middle of folding line 8.3 there is a flap 8.2 along cutting line 8.21 on a surface of base 3. The folding line 3.2 continues into a surface of lateral panel 4' in a shape of a rectangle with a shorter side folding line 4.1' continued in a flap 9.3 and the other shorter side folding line 4.2' continued in a flap 9.4. At one end of a flap 9.3 from folding line 4.1' a shortened flap 9.31 is made and at the other end, a shortened part 9.32 is made, while at one end of a flap 9.4 from folding line 4.2' a shortened flap 9.41 is made and at the other end a shortened part 9.42 is made. On a surface of lateral panel 4' in the middle of folding line 3.2, cutting line 4.31 for ventilation is made.

The other two parallel sides of base 2 are folding lines 2.3 which continue into the rectangular part of a flap 5 which side is folding line 5.1, parallel to folding line 2.3, and it continues into semicircular surface of a flap 5. In the middle of folding line 5.1, a cutting line 5.2 is made at the ends of which cutting lines 5.21 are made, while at the ends of folding line 5.1 elevated 5.31 cutting lines are made.

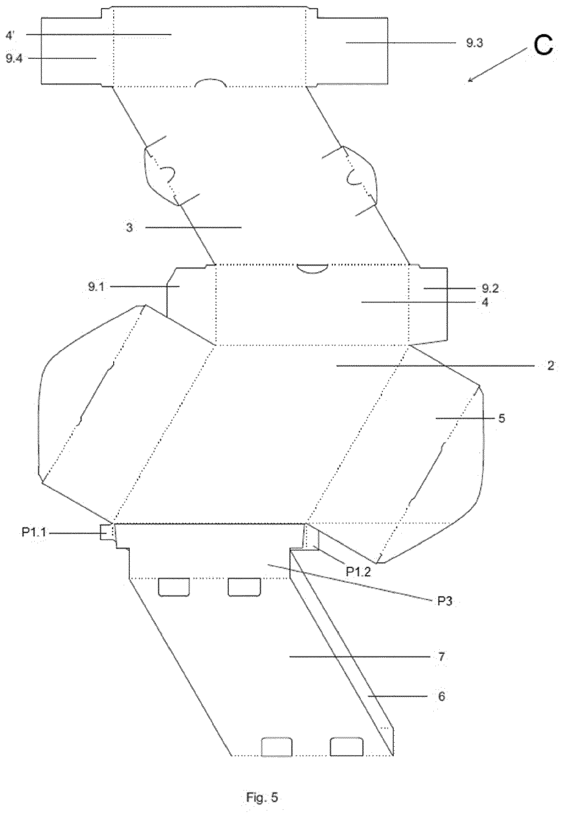

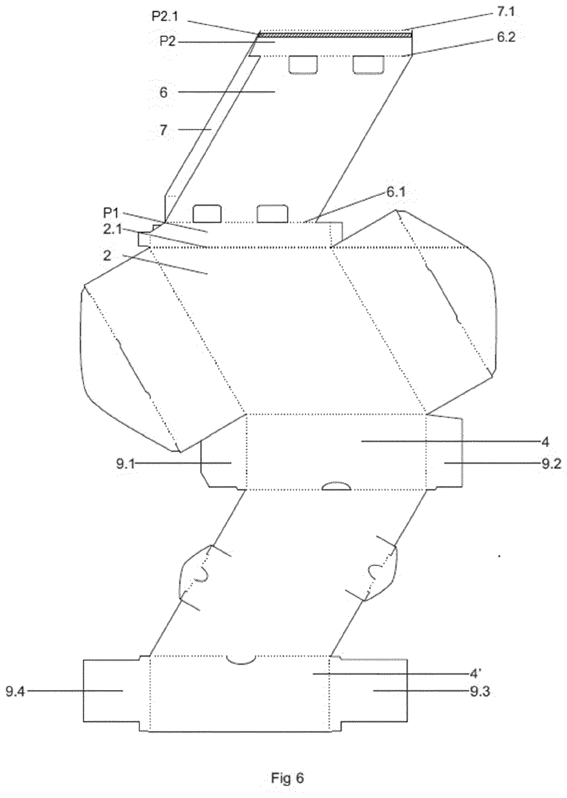

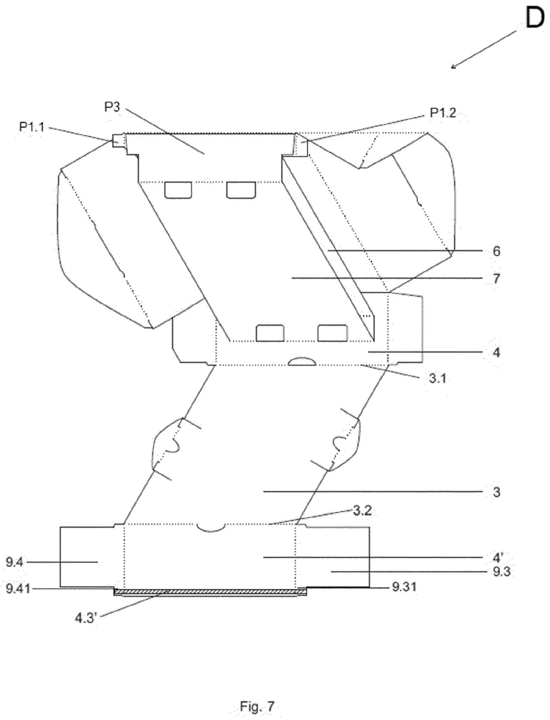

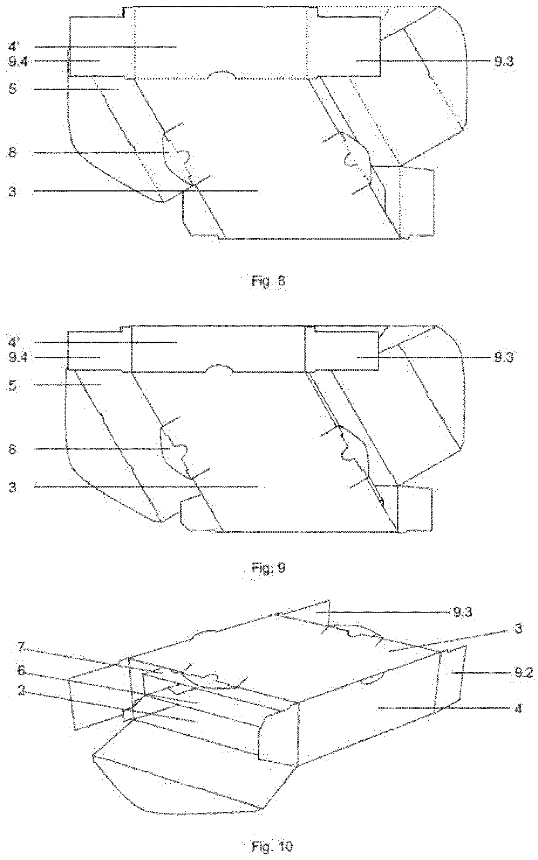

Shaped folded blank A (Fig. 4) is placed in gluing machine, passes in a straight line in one direction and parallel to direction of movement of folded blank A, line glue is applied to a surface flap P3.4 of flap P3, which is bordered by folding line 7.2 and cutting lines along outer contours, shown in solid lines. In continuation of a movement, around folding line 7.1, part of folded blank A that includes compartment surface 7 and a flap P3 is bent at an angle of 180° and using a surface flap P3.4 inseparably connects to a flap P1, between surfaces of flaps P1.1 and P1.2 so that flat surface comprising compartment surface 7 and flap P3 rests to flat surface comprising a flap P1, compartment surface 6 and a flap P2. This folded form C (Fig. 5) of folded blank A rotates by 180° so that the lower flat side is turned upwards (Fig. 6). This folded form is inserted into gluing machine and glue is applied in a line to a surface flap P2.1 of a flap P2, which is bordered by folding lines 6.2, 7.1, and cutting lines along outer contours, shown in solid lines. In the continuation of the movement through the machine, around the folding line 2.1, part of folded form that includes a flap P1, surface of compartment 6, a flap P2, surface of compartment 7 and a flap P3 is bent at an angle of 180°, so a surface flap P2.1 is inseparably connected to lateral panel 4, folded form D (Fig. 7). In the direction of folding line 2.1, part of a flap 5 which is placed between flaps P1.2 and 9.2 is bent so that flat surface comprising P1, compartment surface 6 and flap P2 rests on a flat surface of base 2 and lateral panel 4, and flat surface comprising a flap P3 and compartment surface 7 rests flat surface comprising a flap P1, compartment surface 6 and a flap P2, and the bent part of flap rests to flap 5. Next, glue is applied in a line on the surface of 4.3' and shortened flaps 9.31, 9.41. In the continuation of a movement through the machine, around folding line 3.1, the part of folded form that includes base 3, lateral panel 4', flaps 9.3, 9.4 is bent at an angle of 180°, and over a surface 4.3' inseparably connects to a flap P3, and shortened flaps 9.31, 9.41 are placed on surfaces of flaps P1.1, P1.2 and flat form of box 1 is made (Fig. 8, Fig. 9).

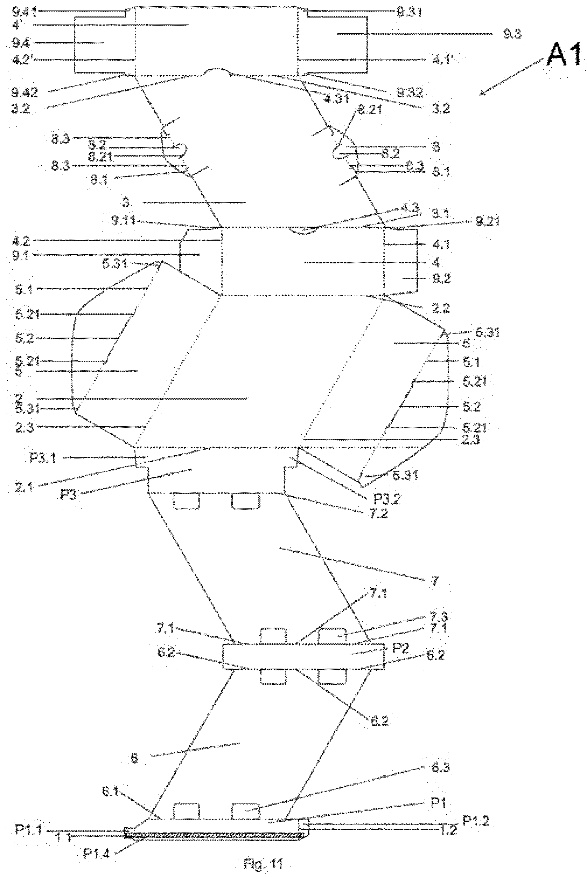

In another embodiment, a self-folding box 1 is made from a folded blank A1 (Fig. 11) where central part of a folded blank A1 represents a surface of base 2 of a rhomboid shape with sides which are folding lines 2.1, 2.2, 2.3, 2.3 so that folding line 2.1 continues into a rectangular surface P3 with extended surfaces of flaps P3.1, P3.2 which longer side is folding line 2.1 and a parallel shorter side is folding line 7.2, which allows compartments to be retracted inwards in relation to the outer edges of opening. Folding line 7.2 continues into a rhomboid compartment surface 7 which other side is a folding line 7.1, parallel to a folding line 7.2, which continues into a rectangular surface P2 which one side is an extended folding line 7.1 and the other parallel side is an extended folding line 6.2 which continues into a surface of compartment 6 of rhomboid shape. Parallel to folding line 6.2 is folding line 6.1 which continues into a flap P1 of an irregular pentagon shape which shorter side is an extended folding line 6.1 and the longer parallel side is equal to the length of folding line 2.1 so that at one end of longer parallel side there is a vertical folding line 1.2 which continues into a surface flap P1.2 while at the other end there is vertical and shorter folding line 1.1 which continues into a surface flap P1.1. On a surface of compartment 6 along folding lines 6.1, 6.2 are made two rectangular openings 6.3 for ventilation and on the surface of compartment 7 along folding lines 7.1, 7.2 are made two rectangular openings 7.3 for ventilation.

The other side of base 2 is folding line 2.2, parallel to folding line 2.1, which continues into a surface of lateral panel 4 of the rectangular shape which shorter side is folding line 4.1 which continues into a flap 9.2 and folding line 4.2 which continues into a flap 9.1. The other side of the rectangle, folding line 3.1 is parallel to a folding line 2.2, and at one end it extends to the side of a flap 9.2 on which shortened part 9.21 is made and at the other end extends to the side of a flap 9.1 on which shortened part 9.11 is made. On a surface of a lateral panel 4, a semicircular opening 4.3 for ventilation is made in the middle of a folding line 3.1. The folding line 3.1 continues into a surface of base 3 of the rhomboid shape, which the other parallel side is folding line 3.2. In the middle of the other two parallel sides of base 3 along folding line 8.3 continues into a flap 8, where at the ends of folding line 8.3 there are elevated cutting lines 8.1, and in the middle of folding line 8.3 there is a flap 8.2 along cutting line 8.21 on the surface of the base 3. The folding line 3.2 continues into the surface of the lateral panel 4' in the shape of a rectangle with a shorter side folding line 4.1' continued in a flap 9.3 and the other shorter side the folding line 4.2' continued in a flap 9.4. At one end of a flap 9.3 from folding line 4.1' a shortened flap 9.31 is made and at the other end, a shortened part 9.32 is made, while at one end of a flap 9.4 from folding line 4.2' a shortened flap 9.41 is made and at the other end a shortened part 9.42 is made. On a surface of lateral panel 4' in the middle of a folding line 3.2, a cutting line 4.31 for ventilation is made.

The other two parallel sides of base 2 are folding lines 2.3 which continue into the rectangular part of a flap 5 which side is a folding line 5.1, parallel to folding line 2.3 which continues into the semicircular surface of a flap 5. In the middle of folding line 5.1, a cutting line 5.2 is made at the ends of which cutting lines 5.21 are made, while at the ends of folding line 5.1 elevated 5.31 cutting lines are made.

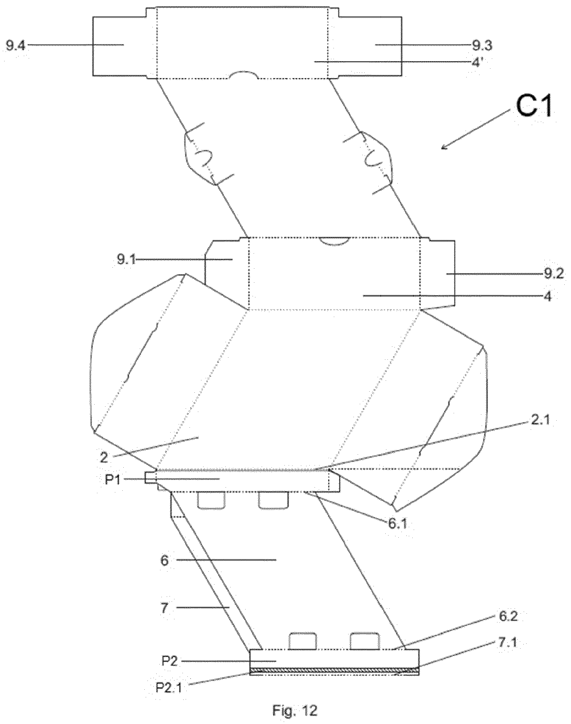

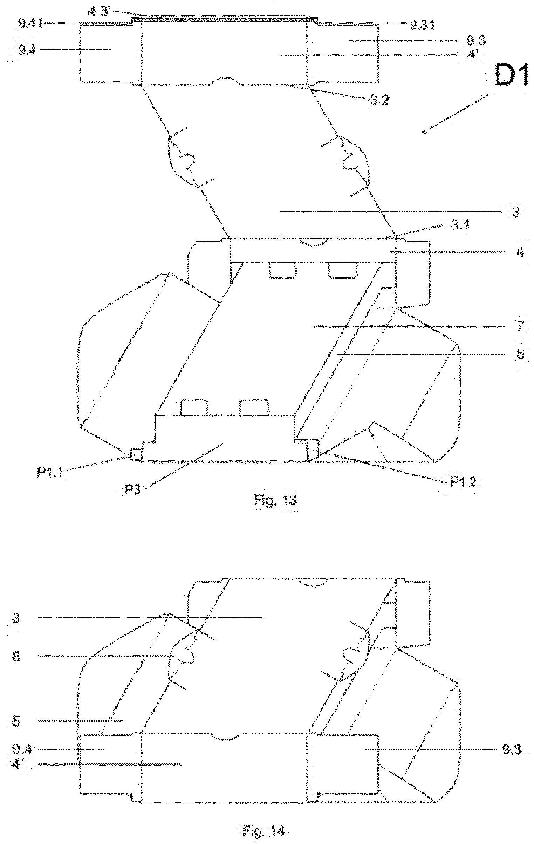

The folded blank A1 (Fig. 11) is placed in the gluing machine, passes in a straight line in one direction and parallel to the direction of movement of folded blank A1, the glue is applied in a line to a surface flap P1.4 of a flap P1 which is bordered by folding line 6.1 and cutting lines along the outer contours, shown in solid lines. In the continuation of the movement around folding line 7.1, the part of folded form that includes a flap P2, a surface of compartment 6 and a flap P1 is bent at an angle of 180° and using a surface flap P1.4 inseparably connects to a flap P3, between surfaces of flaps P3.1 and P3.2 so that flat surface comprising a flap P1, a surface of compartment 6 and a flap P2 rests the flat surface comprising a flap P3 and compartment surface 7, the folded form C1 (Fig.12). On the folded form C1 (Fig. 12) glue is applied in a line to a surface flap P2.1 of a flap P2, which is bordered by folding lines 6.2, 7.1, and cutting lines along the outer contours, shown in solid lines. In the continuation of the movement through a machine, around folding line 2.1, the part of a folded form that includes a flap P3, surface of a compartment 7, a flap P2, surface of a compartment 6 and a flap P1 is bent at an angle of 180°, and using a flap P2.1 inseparably connects to a lateral panel 4, D1 (Fig. 13). In the direction of a folding line 2.1, the part of a flap 5 which is placed between a surface flap P3.2 and a flap 9.2 is bent so that a flat surface comprising P1, compartment surface 6 and a flap P2 rests on a flat surface of base 2 and lateral panel 4, and a flat surface comprising a flat P3 and the compartment surface 7 rests on a flat surface comprising a flat P1, compartment surface 6 and a flat P2, and the bent part of a flap rests on a flap 5. Next, glue is applied in a line on a surface of 4.3' and shortened flaps 9.31, 9.41. In the continuation of the movement around folding line 3.1 the part of folded form that includes the base 3, lateral panel 4', flaps 9.3, 9.4 is bent at an angle of 180° and using a surface 4.3 ' inseparably connects to a flap P3, also shortened flaps 9.31, 9.41 are placed on surfaces of flaps P1.1, P1.2 so the flat form of box 1 is made (Fig. 14).

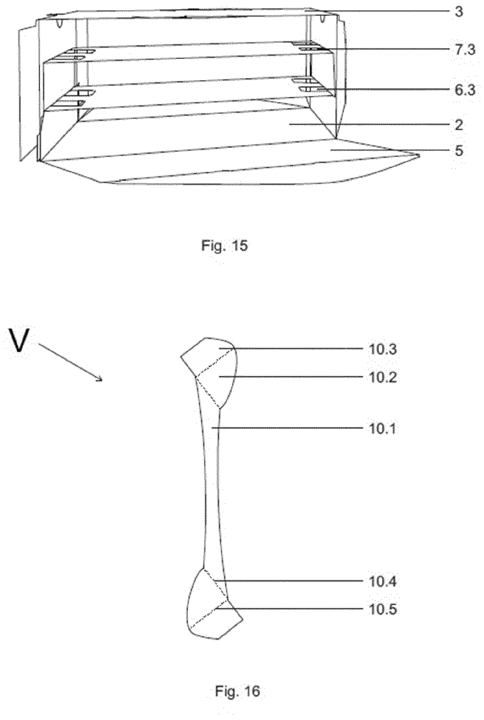

The carry handle 10 (Fig. 17) is formed from a pre-prepared and folded blank V (Fig. 16) which is made of cardboard with or without a polymer layer and is placed in a machine in which a tool with knives is placed (not shown). In the tool, there are knives for cutting along the outer contours of the carry handle 10 and rounded knives which partially enter the cardboard and perform the planned folding lines 10.4, 10.5 on a folded blank B.

The central part of the folded blank V (Fig. 16) represents an elongated surface 10.1 with longer concave sides, while on both shorter sides of a surface 10.1 folding lines 10.4 continue into surfaces 10.2 bordered by folding lines 10.4, 10.5, and arc above them, and folding lines 10.5 continue into a surface of 10.3 of the rectangular trapezoid shape whose one arm is bent.

Box 1 is formed from flat form of box 1 (Fig. 8, Fig. 9), by folding upwards lateral panels 4, 4' into a vertical position relative to base 2, and they obtain the shape of a prism with bases 2, 3 in the shape of the rhomboid.

By folding upwards lateral panels 4, 4', a flap P1 is brought into a vertical position along folding line 2.1, by folding along folding line 6.1 a compartment 6 is formed, while along folding line 6.2, a flap P2 is brought into the vertical position, and by folding along folding line 7.1 a compartment 7 is formed.

In another embodiment, a box 1 is formed from the flat form of a box 1 (Fig. 14), by folding upwards lateral panels 4, 4' which brought to the vertical position a flap P3 along folding line 2.1, and by folding along folding line 7.2 a compartment 7 is formed, while along folding line 7.1 a flap P2 is brought into the vertical position, and by folding along folding line 6.2 a compartment 6 is formed.

Flaps 9.3, 9.4 are bent along folding lines 4.1', 4.2' towards the opening of a box 1, and are overlapped by the rectangular surface of a flap 5, folded along folding line 2.3, while the semicircular surface of a flap 5 is folded along folding line 5.1, and is pulled in below a surface of base 3. By inserting a flap 8 into line 5.2 of the cut, box 1 is closed, i.e. the extraction of the semicircular surface of a flap 5 is prevented. The elements made by the cutting along cutting line 5.21 and the elevated cutting line 8.1 additionally prevent the extraction of a flap 8 from cutting line 5.2. Using shortened parts 9.11, 9.21, 9.32, 9.42 and the elevated parts along cutting lines 5.31, the extraction of the semicircular surface of a flap 5, pulled in below a surface of base 3, is additionally ensured.

In a box 1 formed in this way, between the rectangular surface of a flap 5 and bent flap 9.4, part 10.3 of carry handle 10 is inserted on one side, while part 10.2 rests on the outer surface of a lateral panel 4', on the other side of carry handle 10 part 10.3 is inserted between the rectangular surface of a flap 5 and folded flap 9.2 and part 10.2 rests on the outer surface of a lateral panel 4. Part 10.1 of a carry handle 10 is placed diagonally over the outer surface of base 3.

Rectangular openings 6.3, 7.3 made in pairs on compartments 6, 7, and a semicircular opening 4.3 and an opening along cutting line 4.31, made on lateral panels 4, 4' serve for ventilation of a pizza so that it does not steam.

The box 1 formed in this way can hold six slices of pizza, the whole pizza, two slices on compartments 6, 7, and two slices on base 2.

## Claims

1. A self-folding box for packing pizzas with compartments and a carry handle, which are made of a first folded blank (A, A1) for forming the box and a second folded blank (V) for forming the handle (10), formed by folding and gluing into a flat form of said box (1) which is formed from upright surfaces into a vertical position comprises a box (1) of a prism shape with rhomboid bases (2, 3) and two parallel rectangular lateral panels (4, 4'), while the other two parallel sides are rectangular surfaces of flaps (5), wherein said formed box (1) is made of a flat form of said box (1), comprising two upright rectangular lateral panels (4, 4'), folded along parallel folding lines (2.1, 2.2 3.1, 3.2), upright flaps (9.1, 9.2, 9.3, 9.4) which are continued on said upright rectangular lateral panels (4, 4'), and upright rectangular parts of flaps (5) folded along folding lines (2.3), so that surfaces of the upright rectangular lateral panels (4, 4'), surfaces of the upright flaps (9.1, 9.2, 9.3, 9.4) and surfaces of the rectangular parts of flaps (5) are placed vertically in relation to the rhomboid bases (2, 3), at one side of first base (2) a first side of a flap (P1) is connected through a folding line (2.1), whereas a second parallel side of flap (P1) is defined by a further folding line (6.1) through which a fist side of a rhomboid compartment flap (6) is connected whereas a second parallel side of said rhomboid compartment flap (6) is defined by a further folding line (6.2) through which a first side of a further flap (P2) is inseparably connected to the first upright lateral panel (4) while a second parallel side of said further flap (P2) is defined by a further folding line (7.1) through which a first side of a further rhomboid compartment flap (7) is connected, whereas a second parallel side of said further rhomboid compartment flap (7) is defined by a further folding line (7.2) through which a first side of a second further flap (P3) is inseparably connected to flap (P1) while on the other side said second further flap (P3) is inseparably connected to the second upright lateral panel (4'), at the second side of first base (2) said first lateral panel (4) is connected through a further folding line (2.2) parallel to a folding line (2.1), whereas said lateral panel (4) is defined by further folding line (3.1), through which the surface of the second base (3) is connected, whereas a second parallel side of the second base (3) is defined by a further folding line (3.2), through which the upright surface of the second lateral panel (4') is inseparably connected to a surface of the second further flap (P3), where the compartments (6, 7) are bordered by the lateral panels (4,4'), where a semicircular part of the flap (5) is pulled in below the second base (3) and a folded flap (8) which is connected to the second base (3) with a folding line (8.3) is inserted through cutting line (5.2) provided on a folding line (5.1) between said semicircular part of the flap (5) and said rectangular surface of the flap (5).

2. A self-folding box, according to claim 1, **characterized in that** the flap (P1) is shaped as an irregular pentagon and a longer side of said flap (P1) is defined by the folding line (2.1) and a parallel shorter side of said flap (P1) is defined by the further folding line (6.1) and wherein the further flap (P2) is shaped as a rectangular trapezoid, and wherein the second further flap (P3) is formed in the shape of a rectangle with extended surface of flaps (P3.1, P3.2) connected at the ends.

3. A self-folding box, according to claims 1 and 2, **characterized in that** second further flap (P3) is by using a surface flap (P3.4) inseparably connected to the flap (P1) using glue, that the further flap (P2) is by using a surface flap (P2.1) inseparably connected to the first lateral panel (4) using glue and that a surface of the second lateral panel (4') is by using surface (4.3') inseparably connected to the second further flap (P3) using glue.

4. A self-folding box, according to claims 1 and 3, **characterized in that** shorter sides of the lateral panels (4, 4') are defined by folding lines (4.1, 4.2, 4.1', 4.2') through which the upright flaps (9.2, 9.1, 9.3, 9.4) are connected.

5. A self-folding box, according to claims 1 and 2, **characterized in that** the other two sides of the first base (2) are folding lines (2.3) through which the rectangular parts of flaps (5) are connected, whereas other side of said rectangular parts of the flaps (5) is defined by a further folding line (5.1) through which the semicircular part is connected, and that the cutting line (5.2) is in the middle of the folding line (5.1).

6. A self-folding box, according to claim 1, **characterized in that** in the middle of the other two parallel sides of the second base (3) folded flaps (8) are connected through folding lines (8.3).

7. A self-folding box, according to claim 1, **characterized in that** a first side of the flap is connected through the folding line (2.1) in a form of a rectangle with extended surfaces of flaps, so the longer side of said flap is defined by the folding line (2.1) and parallel shorter side of said flap is defined by the further folding line (7.2) and wherein the further flap is rectangular, and wherein the second further flap is shaped as an irregular pentagon, wherein a shorter side of said pentagonal shaped further second flap is defined by the extended folding line (6.1) and a longer parallel side of said pentagonal shaped second further flap is equal to the length of folding line (2.1).

8. A self-folding box, according to any one of the claims 1 and 3-6, **characterized in that** a flap (10.3) of the carry handle (10) is inserted between the rectangular surface of a flap (5) and an upright flap (9.4) which is folded around folding line (4.2'), while a flap (10.2) rests on a surface of a lateral panel (4'), that a second flap (10.3) of the carry handle (10) is inserted between the rectangular surface of a flap (5) and a further upright flap (9.2) which is folded around folding line (4.1) while a flap (10.2) rests on a surface of the first lateral panel (4), and that a flap (10.1) of the carry handle (10) is placed diagonally over the outer surface of the second base (3).

9. A self-folding box, according to claim 8, **characterized in that** the carry handle (10) is made of an elongated flap (10.1) with longer concave sides, while both shorter sides are folding lines (10.4) which continue into flaps (10.2), whose surfaces are bordered by folding lines (10.4, 10.5) and an arch above them, that folding lines (10.5) continue into the rectangular trapezoid flaps (10.3) of which one side is arched.

## Patentansprüche

1. Eine selbstfaltende Schachtel zum Verpacken von Pizzas mit Fächern und einem Tragegriff, die aus einem ersten gefalteten Zuschnitt (A, A1) zur Bildung der Schachtel und einem zweiten gefalteten Zuschnitt (V) zur Bildung des Griffs (10) besteht, der durch Falten und Kleben in eine flache Form der Schachtel (1) übergeht, die aus aufrechten Flächen in eine vertikale Position geformt ist, umfasst eine Schachtel (1) in Prismenform mit rhombenförmigen Basen (2, 3) und zwei parallelen rechteckigen Seitenflächen (4, 4'), während die anderen beiden parallelen Seiten rechteckige Flächen von Klappen (5) sind. Die geformte Schachtel (1) besteht aus einer flachen Form der Schachtel (1) mit zwei aufrechten rechteckigen Seitenflächen (4, 4'), die entlang paralleler Faltlinien (2.1, 2.2, 3.1, 3.2) gefaltet sind, aufrechten Klappen (9.1, 9.2, 9.3, 9.4), die auf den aufrechten rechteckigen Seitenflächen (4, 4') fortgesetzt werden, und aufrechten rechteckigen Teilen der Klappen (5), die entlang Faltlinien (2.3) gefaltet sind, sodass die Flächen der aufrechten rechteckigen Seitenflächen (4, 4'), die Flächen der aufrechten Klappen (9.1, 9.2, 9.3, 9.4) und die Flächen der rechteckigen Teile der Klappen (5) vertikal in Bezug auf die rhombenförmigen Basen (2, 3) angeordnet sind, am einer Seite der ersten Basis (2) ist eine erste Seite einer Klappe (P1) durch eine Faltlinie (2.1) verbunden, während eine zweite parallele Seite der Klappe (P1) durch eine weitere Faltlinie (6.1) definiert ist, durch die eine erste Seite einer rhombenförmigen Fachklappe (6) verbunden ist. Eine zweite parallele Seite der rhombenförmigen Fachklappe (6) ist durch eine weitere Faltlinie (6.2) definiert, durch die eine erste Seite einer weiteren Klappe (P2) untrennbar mit der ersten aufrechten Seitenfläche (4) verbunden ist, während eine zweite parallele Seite dieser weiteren Klappe (P2) durch eine weitere Faltlinie (7.1) definiert ist, durch die eine erste Seite einer weiteren rhombenförmigen Fachklappe (7) verbunden ist. Eine zweite parallele Seite dieser weiteren rhombenförmigen FachKlappe (7) ist durch eine weitere Faltlinie (7.2) definiert, durch die eine erste Seite einer zweiten weiteren Klappe (P3) untrennbar mit der Klappe (P1) verbunden ist, während auf der anderen Seite diese zweite weitere Klappe (P3) untrennbar mit der zweiten aufrechten Seitenfläche (4') verbunden ist, auf der zweiten Seite der ersten Basis (2) ist die erste Seitenfläche (4) durch eine weitere Faltlinie (2.2) parallel zu einer Faltlinie (2.1) verbunden, während diese Seitenfläche (4) durch eine weitere Faltlinie (3.1) definiert ist, durch die die Fläche der zweiten Basis (3) verbunden ist. Eine zweite parallele Seite der zweiten Basis (3) ist durch eine weitere Faltlinie (3.2) definiert, durch die die aufrechte Fläche der zweiten Seitenfläche (4') untrennbar mit einer Fläche der zweiten weiteren Klappe (P3) verbunden ist, wobei die Fächer (6, 7) von den Seitenfächer (4, 4') begrenzt ist, ein halbkreisförmiger Teil der Klappe (5) wird unterhalb der zweiten Basis (3) eingezogen, und eine gefaltete Klappe (8), die mit einer Faltlinie (8.3) mit der zweiten Basis (3) verbunden ist, wird durch eine Schnittlinie (5.2), die aug einer Faltlinie (5.1) zwischen diesem halbkreisförmigen Teil der Klappe (5) und der rechteckigen Fläche der Klappe (5) vorgesehen ist, eingeführt.

2. Eine selbstfaltende Schachtel nach Anspruch 1, **gekennzeichnet dadurch, dass** die Klappe (P1) als ein unregelmäßiges Pentagon geformt wird, während eine parallel kürzere Seite durch die weitere Faltlinie (6.1) definiert ist. Dabei ist die weitere Klappe (P2) als ein rechteckiges Trapezoid geformt, und die zweite weitere Klappe )P3) ist in Form eines Rechtecks mit erweiterter Oberfläche der Klappen (P3.1), P3.2) an den Enden geformt.

3. Eine selbstfaltende Schachtel nach den Anspüchen 1 und 2, **gekennzeichnet dadurch, dass** die zweite weitere Klappe (P3) durch Verwendung einer Oberflächenklappe (P3.4) untrennbar mit der Klappe (P1) durch Klebstoff verbunden ist, dass die weitere Klappe (P2) durch Verwendung einer Oberflächenklappe (P2.1) untrennbar mit dem ersten Panel (4) durch Klebstoff verbunden ist und dass eine Oberfläche des zweiten seitlichen Panels (4') durch Verwendung einer Oberfläche (4.3') untrennbar mit der zweiten weiteren Klappe (P3) durch Klebstoff verbunden ist.

4. Eine selbstfaltende Schachtel nach den Ansprüchen 1 und 3, **gekennzeichnet dadurch, dass** die kürzeren Seiten der seitlichen Paneele (4, 4') durch Faltlinien (4.1, 4.2, 4.1', 4.2') definiert sind, durch die die aufrechten Klappen (9.2, 9.1, 9.3, 9.4) verbunden sind.

5. Eine selbstfaltende Schachtel nach den Ansprüchen 1 und 2, **gekennzeichnet dadurch, dass** die anderen beiden Seiten des ersten Bodens (2) Faltlinien (2.3) sint, durch die die rechteckigen Teile der Klappen (5) verbunden sind, wobei die andere Seite dieser rechteckigen Teile der Klappen (5) durch eine weitere Faltlinie (5.1) definiert ist, durch die der halbkreisförmige Teil verbunden ist, und dass die Schnittlinie (5.2) in der Mitte der Faltlinie (5.1) liegt.

6. Eine selbstfaltende Schachtel nach den Ansprüchen 1, **gekennzeichnet dadurch, dass** in der Mitte der anderen beiden parallelen Seiten des zweiten Bodens (3) gefaltete Klappen (8) durch Faltlinien (8.3) verbunden sind.

7. Eine selbstfaltende Schachtel nach den Ansprüchen 1, **gekennzeichnet dadurch, dass** eine erste Seite der durch Faltlinie (2.1) verbundenen Klappen in Form eines Rechtecks mit erweiterten Oberflächen der Klappen verbunden ist, sodass die längere Seite dieser Klappe durch die Faltlinie (2.1) definiert wird und die parallel kürzere Seite durch die weitere Faltlinie (7.2) definiert ist, wobei die weitere Klappe rechteckig ist, die zweite weitere Klappe als ein unregelmäßiges Pentagon geformt ist, wobei eine kürzere Seite dieser unregelmäßig geformten Faltlinie (6.1) und eine längere parallele Seite dieser unregelmäßig geformten Klappe gleich der Länge der Faltlinie (2.1) sind.

8. Eine selbstfaltende Schachtel nach einem der Ansprüche 1 und 3-6, **gekennzeichnet dadurch, dass** eine Klappe (10.3) des Tragegriffs (10) zwischen der rechteckigen Oberfläche einer Klappe (5) und einer aufrechten Klappe (9.4), die um die Faltlinie (4.2') gefaltet ist, eingeführt ist, während eine Klappe (10.2) auf einer Oberfläche eines seitlichen Panels (4') ruht, dass eine zweite Klappe (10.3) des Tragegriff (10) zwischen der rechteckigen Oberfläche einer Klappe (5) und einer weiteren aufrechten Klappe (9.2), die um die Faltlinie (4.1) gefaltet ist, eingeführt ist, während eine Klappe (10.2) auf der Oberfäche des ersten seitlichen Panels (4) ruht, und dass die Klappe (10.1) des Tragegriffs (10) diagonal über die äußere Oberfläche des zweiten Bodens (3) platziert ist.

9. Eine selbstfaltende Schachtel nach Anspruch 8, **gekennzeichnet dadurch, dass** der Tragegriff (10) aus einer langen Klappe (10.1) mit längeren konkaven Seiten besteht, während beine kürzeren Seiten Faltlinien (10.4) sind, die in Klappen (10.2) übergehen, deren Oberflächen von Faltlinien (10.4, 10.5) begrenzt sind und daüber einen Bogen haben, dass die Faltlinien (10.5) in die rechteckigen Trapezoid-Klappen (10.3) übergehen, von denen eine Seite gebogen ist.

## Revendications

1. Boîte autopliante pour l'emballage de pizzas avec des compartiments et une poignée, fabriquée à partir de la première découpe pliée (A, A1) pour former la boîte et la deuxième découpe pliée (V) pour former la poignée (10), formée par pliage et collage en une forme plate de ladite boîte (1), qui est formée à partir de surfaces verticales dans une position verticale, et comprend une boîte (1) de forme prismatique avec des bases rhomboïdales (2,3) et deux panneaux latéraux rectangulaires parallèles (4, 4'), tandis que les deux autres côtés parallèles sont des surfaces rectangulaires de languettes (5), où ladite boîte formée (1) est constituée d'une forme plate de ladite boîte (1) comprenant deux panneaux latéraux rectangulaires verticaux (4, 4'), pliés le long des lignes de pliage parallèles (2.1, 2.2, 3.1, 3.2), des languettes verticales (9.1, 9.2, 9.3, 9.4) se prolongeant sur lesdits panneaux latéraux rectangulaires verticaux (4, 4'), et des parties rectangulaires verticales des languettes (5) pliées le long des lignes de pliage (2.3), de sorte que les surfaces des panneaux latéraux rectangulaires verticaux (4, 4'), les surfaces des languettes verticales (9.1, 9.2, 9.3, 9.4) et les surfaces des parties rectangulaires des languettes (5) sont placées verticalement par rapport aux bases rhomboïdales (2,3), d'un côté de la première base (2), le premier côté de la languette (P1) est connecté par la ligne de pliage (2.1), tandis que le deuxième côté parallèle de la languette (P1) est défini par la ligne de pliage supplémentaire (6.1), à travers laquelle le premier côté de la languette de compartiment rhomboïdale (6) est connecté, où le deuxième côté parallèle de ladite languette de compartiment rhomboïdale (6) est défini par la ligne de pliage supplémentaire (6.2), à travers laquelle le premier côté de la languette supplémentaire (P2) est connecté de manière inséparable au premier panneau latéral vertical (4), tandis que le deuxième côté parallèle de ladite languette supplémentaire (P2) est défini par la ligne de pliage supplémentaire (7.1), à travers laquelle le premier côté de la languette supplémentaire de compartiment rhomboïdale (7) est connecté, et le deuxième côté parallèle de ladite languette supplémentaire de compartiment rhomboïdale (7) est défini par la ligne de pliage supplémentaire (7.2), à travers laquelle le premier côté de la deuxième languette supplémentaire (P3) est connecté de manière inséparable à la languette (P1), tandis que de l'autre côté, ladite deuxième languette supplémentaire (P3) est connectée de manière inséparable au deuxième panneau latéral vertical (4'), de l'autre côté de la première base (2), ledit premier panneau latéral (4) est connecté par la ligne de pliage supplémentaire (2.2) parallèle à la ligne de pliage (2.1), où ledit panneau latéral (4) est défini par la ligne de pliage supplémentaire (3.1), à travers laquelle la surface de la deuxième base (3) est connectée, et le deuxième côté parallèle de la deuxième base (3) est défini par la ligne de pliage supplémentaire (3.2), à travers laquelle la surface verticale du deuxième panneau latéral (4') est connectée de manière inséparable à la surface de la deuxième languette supplémentaire (P3), où les compartiments (6, 7) sont bordés par les panneaux latéraux (4, 4'), où la partie semi-circulaire de la languette (5) est repliée sous la deuxième base (3), et la languette pliée (8), qui est connectée à la deuxième base (3) avec la ligne de pliage (8.3), est insérée à travers la ligne de découpe (5.2) prévue sur la ligne de pliage (5.1) entre ladite partie semi-circulaire de la languette (5) et ladite surface rectangulaire de la languette (5).

2. Boîte autopliante, selon la revendication 1, **caractérisée en ce que** la languette (P1) prend la forme d'un pentagone irrégulier, et le côté plus long de ladite languette (P1) est défini par la ligne de pliage (2.1), tandis que le côté plus court et parallèle de ladite languette (P1) est défini par la ligne de pliage supplémentaire (6.1), et la languette supplémentaire (P2) prend la forme d'un trapèze rectangle, et la deuxième languette supplémentaire (P3) adopte la forme d'un rectangle avec une surface étendue des languettes (P3.1, P3.2) connectée aux extrémités.

3. Boîte autopliante, selon les revendications 1 et 2, **caractérisée en ce que** la deuxième languette supplémentaire (P3) est, par l'utilisation de la languette de surface (P3.4), connectée de manière indissociable à la languette (P1) avec de la colle, que la languette supplémentaire (P2) est, par l'utilisation de la languette de surface (P2.1), connectée de manière indissociable au premier panneau latéral (4) avec de la colle, et que la surface du deuxième panneau latéral (4') est, par l'utilisation de la surface (4.3'), connectée de manière indissociable à la deuxième languette supplémentaire (P3) avec de la colle.

4. Boîte autopliante, selon les revendications 1 et 3, **caractérisée en ce que** les côtés plus courts des panneaux latéraux (4,4') sont définis par des lignes de pliage (4.1, 4.2, 4.1', 4.2') à travers lesquelles les languettes verticales (9.2, 9.1, 9.3, 9.4) sont connectées.

5. Boîte autopliante, selon les revendications 1 et 2, **caractérisée en ce que** deux autres côtés de la première base (2) sont des lignes de pliage (2.3) à travers lesquelles les parties rectangulaires des languettes (5) sont connectées, tandis que l'autre côté desdites parties rectangulaires des languettes (5) est défini par la ligne de pliage supplémentaire (5.1) à travers laquelle la partie semi-circulaire est connectée, et que la ligne de découpe (5.2) se trouve au milieu de la ligne de pliage (5.1).

6. Boîte autopliante, selon la revendication 1, **caractérisée en ce que**, au milieu des deux autres côtés parallèles de la deuxième base (3), des languettes pliées (8) sont connectées à travers des lignes de pliage (8.3).

7. Boîte autopliante, selon la revendication 1, **caractérisée en ce que** le premier côté de la languette est connecté à travers la ligne de pliage (2.1) sous la forme d'un rectangle avec des languettes de surfaces étendues, de sorte que le côté plus long de ladite languette est défini par la ligne de pliage (2.1) et le côté plus court parallèle de ladite languette est défini par la ligne de pliage supplémentaire (7.2), où la languette supplémentaire est rectangulaire, et la deuxième languette supplémentaire adopte la forme d'un pentagone irrégulier, où le côté plus court de ladite deuxième languette supplémentaire de forme pentagonale, est défini par la ligne de pliage étendue (6.1), et le côté plus long parallèle de ladite deuxième languette supplémentaire de forme pentagonale est égal à la longueur de la ligne de pliage (2.1).

8. Boîte autopliante, selon l'une quelconque des revendications 1 et 3 à 6, **caractérisée en ce que** la languette (10.3) de la poignée (10) est insérée entre la surface rectangulaire de la languette (5) et la languette verticale (9.4) qui est pliée autour de la ligne de pliage (4.2'), tandis que la languette (10.2) se situe sur une surface du panneau latéral (4'), que la deuxième languette (10.3) de la poignée (10) est insérée entre la surface rectangulaire de la languette (5) et la languette verticale supplémentaire (9.2) qui est pliée autour de la ligne de pliage (4.1), tandis que la languette (10.2) se situe sur une surface du premier panneau latéral (4), et que la languette (10.1) de la poignée (10) est placée en diagonale sur la surface extérieure de la deuxième base (3).

9. Boîte autopliante, selon la revendication 8, **caractérisée en ce que** la poignée (10) est constituée d'une languette allongée (10.1) avec des côtés concaves plus longs, tandis que les deux côtés plus courts sont des lignes de pliage (10.4) qui se prolongent en languettes (10.2), dont les surfaces sont délimitées par des lignes de pliage (10.4, 10.5) et un arc au-dessus d'elles, et que les lignes de pliage (10.5) se prolongent en languettes trapézoïdales rectangulaires (10.3) dont un côté est arqué.
